# FASCICULE DE BREVET EUROPEEN

(11) **EP 3 654 759 B1**
(45) Date de publication et mention de la délivrance du brevet: **02.08.2023**
(21) Numéro de dépôt: 17780660.1
(22) Date de dépôt: 25.09.2017
(51) Int. Cl.: A01G 17/02

(54) **AUTRE SYSTEME D'EFFEUILLAGE PNEUMATIQUE ET MACHINE AGRICOLE EQUIPEE D'UN TEL SYSTEME**
ANDERES PNEUMATISCHES ENTLAUBUNGSSYSTEM UND LANDWIRTSCHAFTLICHE MASCHINE, DIE MIT EINEM SOLCHEN SYSTEM AUSGESTATTET IST
ANOTHER PNEUMATIC LEAF-STRIPPING SYSTEM AND AGRICULTURAL MACHINE EQUIPPED WITH SUCH A SYSTEM

(30) Priorité: 21.07.2017 FR 1756963
(43) Date de publication de la demande: 27.05.2020
(73) Titulaire: Collard, 51150 Bouzy (FR)
(72) Inventeur: COLLARD, Yannick, 51150 Bouzy (FR); COLLARD, Corinne, 51150 Bouzy (FR)
(74) Mandataire: Hirsch & Associés
(86) Numéro de dépôt international: PCT/EP2017/074217
(87) Numéro de publication internationale: WO 2019/015788

(56) Documents cités:
- EP-A1- 2 820 940
- FR-A1- 2 543 792
- FR-A1- 2 712 461
- FR-A1- 2 924 571

## Description

La présente invention concerne un système d'effeuillage pneumatique, ainsi qu'une machine agricole équipée d'un tel système. L'invention trouve notamment une application dans le domaine de la viticulture.

On connaît, en viticulture, des systèmes d'effeuillage pneumatiques tel que ceux décrits dans les documents FR 2 924 571, FR 2712461 et FR 2543792. De tels systèmes permettent d'effeuiller des ceps de vigne pour éliminer les feuilles masquant les grappes de raisin et les dérobant au rayonnement solaire censé contribuer au mûrissement de ces grappes.

Ces systèmes d'effeuillage permettent également de faciliter l'accès aux grappes, et de les rendre ainsi plus visibles, ce qui est particulièrement important pour la vendange manuelle.

En outre, de tels systèmes ont également pour but d'assurer une bonne aération de la végétation, empêchant ou limitant ainsi le développement de maladies, et réduisant de ce fait le besoin de traitement.

Ces systèmes comprenant généralement un carter circulaire pourvu d'un bras destiné à être monté sur une machine agricole, directement ou par l'intermédiaire d'un châssis, le carter étant pourvu de plusieurs fentes semi-circulaires.

Des moyens d'effeuillage pneumatiques sont montés dans le carter, sous la forme d'un ou plusieurs tourniquets chacun pourvus d'au moins deux buses de projection d'air comprimé, ces moyens étant reliés à une alimentation en air comprimé.

L'effeuillage est ainsi obtenu par projection d'air depuis les buses en rotation, à travers les fentes dans le carter.

Un des problèmes rencontrés avec de tels systèmes est que, à vitesse constante du tracteur sur lequel il est monté, et à vitesse constante de rotation des tourniquets, l'intensité d'effeuillage est uniforme sur toute la zone concernée. Or, pour une même zone d'effeuillage, il peut être nécessaire d'effeuiller plus ou moins certaines parties, en fonction d'un certain nombre de paramètres tels que la période de l'année, la maturité des grappes, l'orientation géographique, etc...

En outre, selon la période, il est nécessaire de modifier le type d'effeuillage (effeuillage précoce, effeuillage tardif juste avant vendange). Or, sans intervention manuelle par exemple pour changer la taille des buses, le système n'est pas polyvalent.

L'augmentation du débit d'air comprimé au niveau de l'alimentation du système n'est pas non plus une solution satisfaisante, dans la mesure où elle engendre une dépense d'énergie plus importante, du bruit impactant l'environnement, un risque d'agression plus important sur les grappes et une usure mécanique plus rapide.

Un des buts de l'invention est donc de résoudre notamment les problèmes précités.

Ainsi, l'invention a notamment pour objectif de proposer des moyens de buses et de sélecteur permettant notamment de modifier facilement la force avec laquelle le flux d'air est projeté sur la zone à effeuiller, et donc la quantité de feuilles ou de morceaux de feuilles effeuillés dans une zone d'effeuillage déterminée. Le sélecteur permet de modifier facilement la buse utilisée pour l'effeuillage, sans avoir à démonter la buse pour la remplacer par une autre.

Un des buts de l'invention est donc de résoudre notamment les problèmes précités. Ainsi, l'invention a notamment pour objectif de proposer un système d'effeuillage permettant un effeuillage polyvalent, sans changement de pièces, et sans impact négatif sur l'environnement et le coût de fonctionnement.

L'invention a ainsi pour objet, selon un premier aspect un système d'effeuillage pneumatique, selon la revendication 1, notamment pour effeuiller des ceps de vigne, destiné à être monté sur une machine agricole tel qu'un tracteur, et comprenant:
- un carter pourvu d'un bras destiné à être monté sur la machine agricole directement ou par l'intermédiaire d'un châssis, et pourvu d'au moins une ouverture,
- des moyens d'effeuillage pneumatiques montés dans le carter,
- une conduite d'alimentation apte à alimenter les moyens d'effeuillage en air comprimé, en sorte de permettre l'effeuillage par projection d'air comprimé par les moyens d'effeuillage au travers de l'ouverture dans le carter,
- au moins deux buses (12, 13) de projection d'air comprimé de diamètres différents ce système :
   - comprenant un sélecteur (14) pouvant prendre une première et une deuxième positions dans lesquelles il est apte à orienter le flux d'air comprimé en provenance de la conduite d'alimentation (10) exclusivement vers une première, respectivement une deuxième, des deux buses (12, 13), en sorte que lorsque le flux d'air est orienté vers l'une des deux buses, l'effeuillage est effectué selon l'une des deux intensités d'effeuillage, et lorsque le flux d'air est orienté vers l'autre des deux buses, l'effeuillage est effectué selon l'autre des deux intensités d effeuillage.

L'utilisation d'au moins deux buses de diamètres différents et d'un sélecteur exclusif permet notamment de modifier facilement la force avec laquelle le flux d'air est projeté sur la zone à effeuiller, et donc la quantité de feuilles ou de morceaux de feuilles effeuillés dans une zone d'effeuillage déterminée. Le sélecteur permet de modifier facilement la buse utilisée pour l'effeuillage, sans avoir à démonter la buse pour la remplacer par une autre buse.

Selon l'invention, le sélecteur de dispositif d'effeuillage comprend une vanne présentant au moins une sortie apte à communiquer alternativement, par rotation de la vanne autour d'un axe central, avec l'une ou l'autre des deux buses dans la première, respectivement la deuxième, position du sélecteur.

Suivant certaines variantes de ce mode de réalisation, le système comprend en outre une ou plusieurs des caractéristiques suivantes, prise(s) isolément ou suivant toutes les combinaisons techniquement possibles :
- la rotation de la vanne est activable par l'intermédiaires de moyens d'activation, manuellement et/ou automatiquement par l'intermédiaire d'une commande.
- le sélecteur comprend deux sorties distinctes, chacune communiquant avec l'une des deux buses , un clapet étant disposé entre chacune desdites sorties et chacune desdites buses et chacun de ces clapets étant commandé manuellement et/ou automatiquement, par l'intermédiaire de moyens de commande, permettant ainsi de boucher l'une ou l'autre des sorties, donc de rendre inactive l'une ou l'autre des deux buses.

La présente invention a également pour objet une machine agricole, tel qu'un tracteur, comprenant un châssis de montage d'un équipement annexe, caractérisé en ce qu'il comprend au moins un système d'effeuillage selon l'une quelconque des revendications précédentes monté sur le châssis par l'intermédiaire du bras.

Les caractéristiques et avantages de l'invention apparaitront à la lecture de la description qui va suivre, donnée uniquement à titre d'exemple, et non limitative, en référence aux figures annexées suivantes :
- figure 1 : représentation schématique d'un premier exemple de système d'effeuillage selon l'invention, en perspective, côté face d'effeuillage ;
- figures 2 et 3 : représentations schématique du système d'effeuillage de la figure 1, vue côté opposé à la face d'effeuillage, respectivement en positions horizontale et verticale du carter 2 ;
- figure 4 : représentation schématique d'un deuxième exemple de système d'effeuillage selon l'invention, en perspective, côté opposé à la face d'effeuillage ;
- figures 5 et 6 : représentations schématique du système d'effeuillage de la figure 1, vue côté face d'effeuillage, respectivement en positions horizontale et verticale du carter 2 ;
- figure 7 : représentation schématique de la zone de travail du système des figures 5 et 6;
- figure 8 : représentation schématique d'une partie des moyens d'effeuillage 8, 9 à l'intérieur du carter 2 des figures précédentes ;
- figure 9 : représentation schématique de deux systèmes d'effeuillage selon l'invention montés sur un châssis de montage d'équipement annexe pour machine agricole.

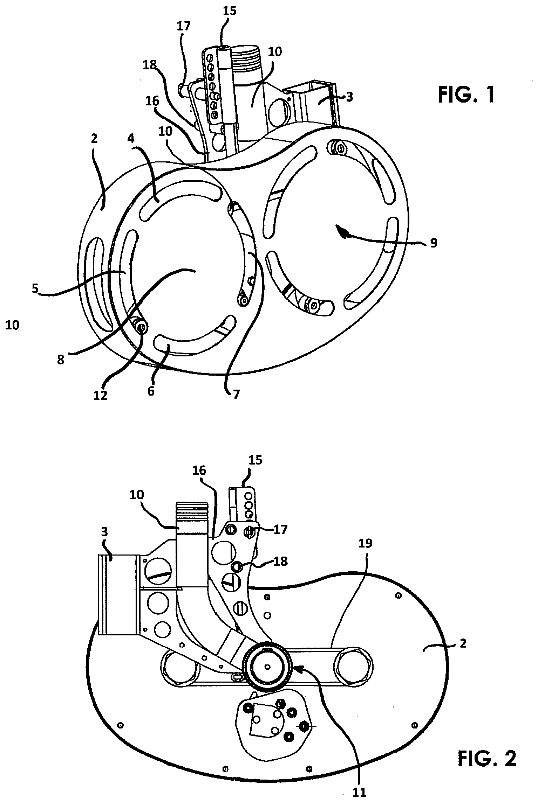

Le système d'effeuillage pneumatique illustré sur les figures 1 à 9 comprend notamment un carter 2, de forme d'ensemble en haricot. Alternativement, la forme d'ensemble du carter 2 peut être ovale. A l'intérieur du carter 2 sont montés deux moyens d'effeuillage 8, 9 pneumatiques.

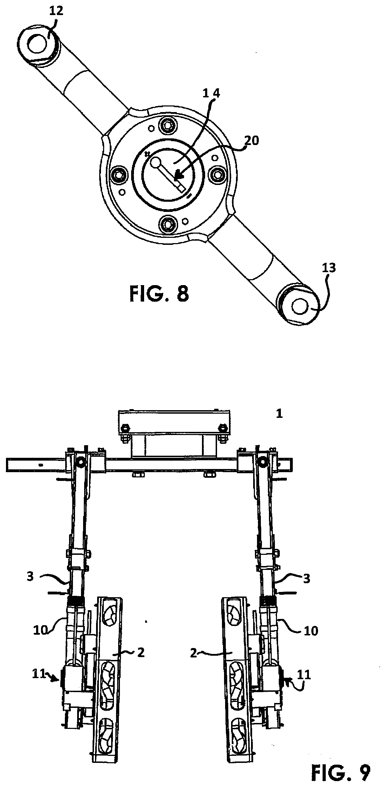

Le carter 2 est pourvu d'un bras 3, 10, 16 destiné à être monté sur une machine agricole, tel qu'un tracteur agricole, directement ou par l'intermédiaire d'un châssis 1 tel que représenté sur la figure 9. Précisément, sur cette figure 9, deux systèmes d'effeuillage comprenant chacun un carter 2 et un bras 3, 10 (la pièce 16 n'étant pas représentée sur la figure 9), sont montés sur le châssis 1.

Le carter 2 est pourvu d'au moins une ouverture circulaire 4 à 7 sur sa face d'effeuillage, c'est-à-dire la face du carter 2 destinée à être orientée vers la végétation à traiter. Dans l'exemple représenté sur les figures, le carter 2 est pourvu de deux fois quatre ouvertures circulaires 4 à 7, soit quatre ouvertures pour chaque moyen d'effeuillage 8 et 9.

Tel que visible sur les figures 1, 5 et 6, chacun des moyens d'effeuillage 8 et 9 comprend au moins deux buses 12, 13 de projection d'air comprimé.

Ces buses 12, 13 sont visibles plus en détail sur la figure 8. Dans ce mode de réalisation de la figure 8, les deux buses présentent chacune un diamètre intérieur différent.

Dans ce mode de réalisation, les moyens de réglage de l'intensité d'effeuillage comprennent un sélecteur 14 pouvant prendre une première et une deuxième positions dans lesquelles il est apte à orienter le flux d'air comprimé en provenance de la conduite d'alimentation 10 exclusivement vers une première 12, respectivement une deuxième 13, des deux buses 12, 13.

Ainsi, le flux d'air provenant de la conduite d'alimentation 10 est orienté vers l'une des deux buses 12, 13, l'effeuillage est effectué selon l'une première intensité d'effeuillage, et lorsque le flux d'air est orienté vers l'autre des deux buses 12, 13, l'effeuillage est effectué selon une autre intensité d'effeuillage.

En effet, en fonction du diamètre de la buse 12, 13 alimentée en air comprimé, la force du flux d'air projeté sur une zone d'effeuillage déterminée sera plus ou moins grande, et l'intensité d'effeuillage en termes de quantité de feuilles ou de morceaux de feuilles retirée de cette zone sera plus ou moins grande.

Dans une variante de réalisation, le sélecteur 14 comprend une vanne 14 présentant au moins une sortie apte à communiquer alternativement avec l'une ou l'autre des deux buses 12, 13 dans la première, respectivement la deuxième, position du sélecteur 14.

Pour ce faire, la vanne 14 est apte à être mise en rotation autour d'un axe central. Cette mise en rotation peut être obtenue par des moyens d'activation 20, par exemple une fente 20 dans laquelle on insère manuellement un outil approprié pour entraîner la vanne 14 en rotation.

D'autres moyens d'activation sont bien évidemment possibles, actionnables manuellement et/ou automatiquement par l'intermédiaire de moyens de commande situés à proximité ou à distance.

Dans une autre variante de réalisation, le sélecteur comprend deux sorties distinctes, chacune communiquant avec l'une des deux buses, un clapet étant disposé entre lesdites sorties et chacune desdites buses. Chacun de ces clapets est commandé par l'intermédiaire de moyens de commande, permettant ainsi de boucher l'une ou l'autre des sorties, donc de rendre inactive l'une ou l'autre des deux buses.

Ainsi, lorsque le flux d'air est orienté vers l'une des deux buses, l'effeuillage est effectué selon l'une des deux intensités d'effeuillage, et lorsque le flux d'air est orienté vers l'autre des deux buses, l'effeuillage est effectué selon l'autre des deux intensités d'effeuillage.

Ces moyens de commande peuvent être activés manuellement et/ou automatiquement par l'intermédiaire d'une commande située à proximité ou à distance. Ainsi, le clapet bouche l'une ou l'autre des deux buses.

La présente description est donnée à titre d'exemple et n'est pas limitative de l'invention.

En particulier, le système d'effeuillage selon l'invention est principalement destiné à l'effeuillage de la vigne, mais peut tout aussi bien être utilisé dans d'autres domaines de l'agriculture dans lesquels un effeuillage similaire est utile.

Un exemple de moyens d'effeuillage 8, 9 est donné dans le document FR 2 924 571. Dans ce document, les moyens d'effeuillage 8, 9 sont logés dans un carter de forme d'ensemble circulaire, mais sont aptes à être logé dans le carter 2 selon l'invention même lorsqu'il est de forme non circulaire. Ils comprennent un tourniquet entraîné en rotation par un moteur, ce tourniquet entraînant à son tour en rotation des buses de projection d'air comprimé. L'homme du métier pourra se référer aux détails des modes de réalisation décrits dans le document FR 2 924 571.

Une conduite d'alimentation 10 est prévue pour alimenter les moyens d'effeuillage 8, 9 en air comprimé, permettant l'effeuillage par projection d'air comprimé par ces moyens d'effeuillage 8, 9 au travers de la/des ouvertures circulaires 4 à 7 dans le carter 2.

Le système comprend un bras 3, 10, 16 qui lui-même comprend la conduite d'alimentation 10 ainsi qu'une première pièce de fixation 3 destinée à être montée sur la machine agricole directement, ou par l'intermédiaire d'un châssis tel que le châssis 1 représenté sur la figure 9.

Des moyens de réglage 14, 15 de l'intensité d'effeuillage sont prévus. Ces moyens sont configurés pour permettre l'effeuillage d'une zone à effeuiller déterminée selon deux ou plus intensités d'effeuillage distinctes. L'effeuillage selon l'une des deux intensités d'effeuillage retire une plus grande quantité de feuilles ou morceaux de feuilles de la zone à effeuiller déterminée que ne le permet l'effeuillage selon l'autre des deux intensités d'effeuillage.

Dans les exemples illustrés sur les figures 1 à 7, les moyens de réglage 11, 15 comprennent un joint tournant 11 et des moyens de mise en rotation 15 du carter 2.

La conduite d'alimentation 10 est guidée le long de la pièce de fixation 3, et reliée aux moyens d'effeuillage 8, 9 à travers une jonction 11 dans le carter 2 par l'intermédiaire du joint tournant 11 (la même référence numérique 11 est utilisée pour le joint tournant et la jonction pour simplifier les figures). La jonction 11 est fixée par des moyens de fixation 19 au carter 2.

Le bras 3, 10, 16, en particulier la conduite 10, présente un axe longitudinal principal, avant de se courber vers la jonction 11.

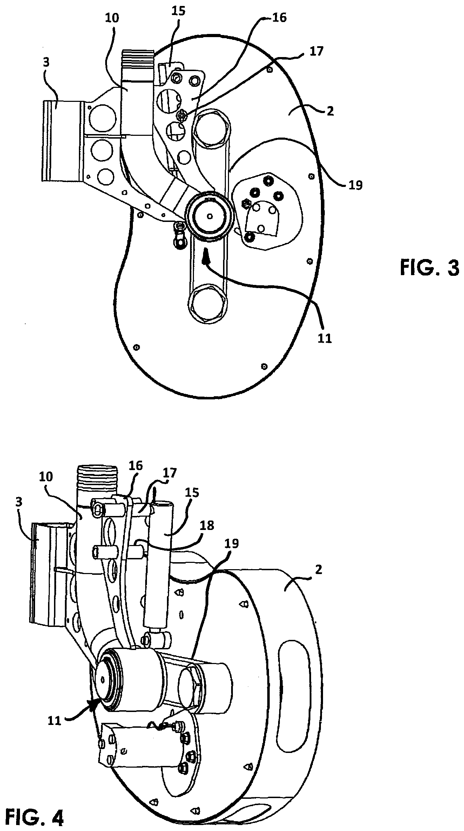

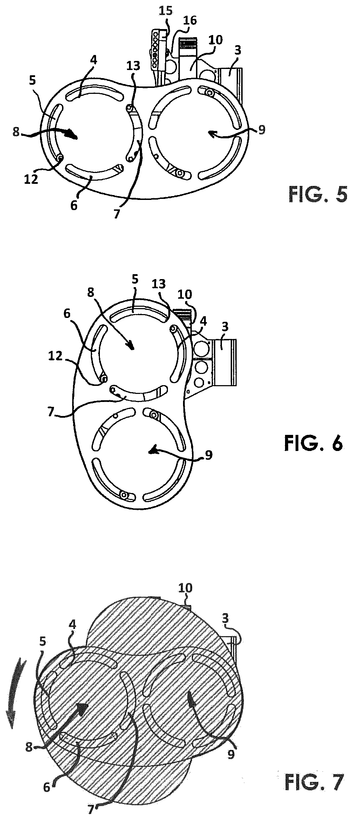

Les moyens de mise en rotation 15 sont configurés pour permettre la mise rotation du carter 2 autour d'un premier axe passant par la jonction 11 et sensiblement perpendiculaire à l'axe longitudinal principal du bras 3, 10, 16. Cette rotation peut se faire entre au moins deux positions angulaires distinctes par rapport au premier axe. Dans l'exemple illustré sur les figures 1 à 7, l'amplitude de rotation est de 90°, entre une première position angulaire dans laquelle le carter 2, formant une tête d'effeuillage, est sensiblement orienté horizontalement, tel qu'illustré sur les figures 1, 2, 4, et 5, et une deuxième position angulaire dans laquelle le carter 2 est sensiblement orienté verticalement, tel qu'illustré sur les figures 3 et 6.

Ainsi, la mise en rotation du carter 2 permet de modifier la position des moyens d'effeuillage 8, 9 par rapport au bras 3, 10, 16, sans gêner l'alimentation des moyens d'effeuillage 8, 9 en air comprimé par l'intermédiaire de la conduite 10, entre une première position correspondant à l'une des deux intensités d'effeuillage distinctes et une deuxième position correspondant à l'autre de ces deux intensités d'effeuillage distinctes.

Dans les exemples illustrés sur le figures 1 à 7, les moyens de mise en rotation 15 comprennent un élément longitudinal 15. Celui-ci s'étend entre un premier point de fixation non rigide au carter 2, et au moins un deuxième point de fixation au bras 3, 10, 16.

Le premier point de fixation est situé à une distance non nulle de l'axe passant par la jonction 11.

Dans l'exemple illustré sur les figures 1, 2, 3, 5 et 6, le deuxième point de fixation peut prendre au moins deux positions distinctes par rapport au bras 3, 10, 16, précisément par rapport à une deuxième pièce de fixation 16 de ce bras 3, 10, 16, correspondant aux deux positions angulaires distinctes du carter 2.

La liaison au niveau du premier point de fixation autorise au moins la rotation de l'élément longitudinal 15 par rapport au carter 2 selon un deuxième axe parallèle au premier axe.

Ainsi, en modifiant la position de l'élément longitudinal 15 par rapport au bras 3, 10, 16, on met en rotation cet élément longitudinal 15 par rapport au carter 2 au niveau du premier point de fixation, ce qui engendre la rotation du carter 2 lui-même autour de l'axe passant par la jonction 11, et donc le passage du carter 2 de l'une à l'autre des deux positions angulaires mentionnées plus haut.

Le changement de position du deuxième point de fixation est réalisé manuellement, en débloquant des moyens de déblocage 17, 18 qui seront décrits plus loin.

Dans l'exemple illustré sur la figure 4, l'élément longitudinal 15 est de longueur variable. Il peut s'agir par exemple d'un vérin hydraulique 15. Cet élément longitudinal 15 est donc apte à changer de longueur, le changement de longueur permettant de faire passer le carter 2 de l'une à l'autre des deux positions angulaires distinctes mentionnées plus haut.

Le changement de longueur de l'élément longitudinal 15 de longueur variable peut être actionné automatiquement par une commande appropriée, située à proximité de l'élément longitudinal 15 ou à distance de celui-ci. Ainsi, le passage du carter 2 de l'une à l'autre des deux positions angulaires distinctes peut être obtenu de manière automatique à partir de cette commande.

Les moyens de blocage 17, 18 évoqués plus haut permettent, dans une première configuration dite de blocage, de bloquer le carter 2 dans l'une ou l'autre des deux positions angulaires distinctes, et dans une deuxième configuration dite de déblocage, d'autoriser le carter 2 à passer de l'une à l'autre des deux positions angulaires distinctes par rotation autour de l'axe passant par la jonction 11.

Par exemple, tel qu'illustré sur les figures 1, 2, 3, 5 et 6, ces moyens de blocage 17, 18 peuvent prendre la forme d'une pièce de blocage 17 qui coopère avec un orifice dans la deuxième pièce de fixation 16 du bras 3, 10, 16. Au moins deux orifices sont prévus dans la deuxième pièce de fixation 16, qui correspondent aux deux positions du deuxième point de fixation entre l'élément longitudinal 15 et le bras 3, 10, 16 mentionné plus haut.

En retirant manuellement la pièce de blocage 17 d'un premier des deux orifices dans la deuxième pièce de fixation 16, on libère l'élément longitudinal 15 de sa liaison avec le bras 3, 10, 16, pour permettre la mise en rotation du carter 2 décrite plus haut. Une fois la position souhaitée du carter 2 atteinte, on replace la pièce de blocage 17 à travers un deuxième des deux orifices dans la deuxième pièce de fixation 16, pour bloquer le carter 2 dans cette deuxième position.

Une deuxième pièce de blocage 18 coopérant avec un autre orifice dans la deuxième pièce de fixation 16 peut être prévue, pour renforcer le blocage et/ou stabiliser la position de l'élément longitudinal 15 le long du bras 3, 10, 16.

Les figures 5 et 6 représentent un exemple de système d'effeuillage respectivement en positions horizontale et verticale du carter 2, et la figure 7 montre, hachurée, la zone de travail du système d'effeuillage décrite lors du passage de l'une à l'autre des deux positions.

Ainsi, en changeant la position du carter 2, on obtient plusieurs, au moins deux, intensité d'effeuillage en termes de quantité de feuilles ou de morceaux de feuilles retirée de cette zone. En effet, lorsque le système se déplace horizontalement entraîné par une machine agricole, la bande balayée par le carter 2 en position horizontale (figure 5) présente une superficie inférieure à celle de la bande balayée par le carter 2 en position verticale (figure 6).

## Revendications

1. Système d'effeuillage pneumatique, notamment pour effeuiller des ceps de vigne, destiné à être monté sur une machine agricole tel qu'un tracteur, et comprenant:
- un carter (2) pourvu d'un bras (3, 10, 16) destiné à être monté sur la machine agricole directement ou par l'intermédiaire d'un châssis (1), et pourvu d'au moins une ouverture (4 à 7),
- des moyens d'effeuillage (8, 9) pneumatiques montés dans le carter (2),
- une conduite d'alimentation (10) apte à alimenter les moyens d'effeuillage (8, 9) en air comprimé, en sorte de permettre l'effeuillage par projection d'air comprimé par les moyens d'effeuillage (8, 9) au travers de l'ouverture (4 à 7) dans le carter (2),
- au moins deux buses (12, 13) de projection d'air comprimé de diamètres différents ce système étant **caractérisé en ce qu'**il comprend:
- un sélecteur (14) pouvant prendre une première et une deuxième positions dans lesquelles il est apte à orienter le flux d'air comprimé en provenance de la conduite d'alimentation (10) exclusivement vers une première, respectivement une deuxième, des deux buses (12, 13), en sorte que lorsque le flux d'air est orienté vers l'une des deux buses, l'effeuillage est effectué selon l'une des deux intensités d'effeuillage, et lorsque le flux d'air est orienté vers l'autre des deux buses, l'effeuillage est effectué selon l'autre des deux intensités d'effeuillage,
- et **en ce que** ce sélecteur (14) comprend une vanne présentant au moins une sortie apte à communiquer alternativement, par rotation de la vanne autour d'un axe central, avec l'une ou l'autre des deux buses (12, 13) dans la première, respectivement la deuxième, position du sélecteur (14).

2. - Système selon la revendications 1, **caractérisé en ce que** la rotation de la vanne (14) est activable par l'intermédiaires de moyens d'activation (20), manuellement et/ou automatiquement par l'intermédiaire d'une commande.

3. - Système selon la revendications 1 ou 2, **caractérisé en ce que** le sélecteur (14) comprend deux sorties distinctes, chacune communiquant avec l'une des deux buses (12, 13), un clapet étant disposé entre le sélecteur et chacune desdites buses et chacun de ces clapets étant commandé manuellement et/ou automatiquement, par l'intermédiaire de moyens de commande, pour boucher l'une ou l'autre des sorties, et ainsi rendre inactive l'une ou l'autre des deux buses (12, 13).

4. - Machine agricole, tel qu'un tracteur, comprenant un châssis (1) de montage d'un équipement annexe, **caractérisé en ce qu'**il comprend au moins un système d'effeuillage selon l'une quelconque des revendications précédentes monté sur le châssis (1) par l'intermédiaire du bras (3, 10, 16).

## Patentansprüche

1. Druckluft-Entlaubungssystem, insbesondere um Weinstöcke zu entlauben, das dazu bestimmt ist, auf einer landwirtschaftlichen Maschine, wie einem Traktor montiert zu werden, und umfassend:
- ein Gehäuse (2), das mit einem Arm (3, 10, 16) versehen ist, der dazu bestimmt ist, auf der landwirtschaftlichen Maschine direkt oder unter Vermittlung eines Gestells (1) montiert zu werden, und das mit mindestens einer Öffnung (4 bis 7) versehen ist,
- Druckluft-Entlaubungsmittel (8, 9), die in dem Gehäuse (2) montiert sind,
- eine Versorgungsleitung (10), die geeignet ist, die Entlaubungsmittel (8, 9) mit Druckluft zu versorgen, um die Entlaubung durch Projektion von Druckluft durch die Entlaubungsmittel (8, 9) durch die Öffnung (4 bis 7) in das Gehäuse (2) zu ermöglichen,
- mindestens zwei Düsen (12, 13) zur Projektion von Druckluft mit unterschiedlichen Durchmessern,
wobei dieses System **dadurch gekennzeichnet ist, dass** es umfasst:
- einen Wahlschalter (14), der eine erste und eine zweite Position einnehmen kann, in denen er geeignet ist, den Druckluftstrom von der Versorgungsleitung (10) ausschließlich zu einer ersten bzw. einer zweiten der zwei Düsen (12, 13) zu leiten, so dass, wenn der Luftstrom zu einer der zwei Düsen geleitet wird, die Entlaubung mit einer der zwei Entlaubungsstärken erfolgt, und wenn der Luftstrom zu der anderen der zwei Düsen geleitet wird, die Entlaubung mit der anderen der zwei Entlaubungsstärken erfolgt,
- und dass der Wahlschalter (14) ein Ventil umfasst, das mindestens einen Ausgang aufweist, der geeignet ist, alternativ durch Drehen des Ventils um eine Mittelachse mit der einen oder der anderen der zwei Düsen (12, 13) in der ersten bzw. zweiten Position des Schalters (14) in Verbindung zu stehen.

2. System nach Anspruch 1, **dadurch gekennzeichnet, dass** das Drehen des Ventils (14) unter Vermittlung von Aktivierungsmitteln (20) manuell und/oder automatisch über eine Steuerung aktivierbar ist.

3. System nach Anspruch 1 oder 2, **dadurch gekennzeichnet, dass** der Schalter (14) zwei getrennte Ausgänge umfasst, die jeweils mit der einen der zwei Düsen (12, 13) in Verbindung stehen, wobei eine Klappe zwischen dem Schalter und jeder der Düsen angeordnet ist, und wobei jede dieser Klappen manuell und/oder automatisch über Steuermittel gesteuert wird, um den einen oder den anderen der Ausgänge zu verlegen und auf diese Weise die eine oder die andere der zwei Düsen (12, 13) inaktiv zu setzen.

4. Landwirtschaftliche Maschine, wie ein Traktor, umfassend ein Gestell (1) zur Montage einer Zusatzausrüstung, **dadurch gekennzeichnet, dass** sie mindestens ein Entlaubungssystem nach einem der vorhergehenden Ansprüche umfasst, das auf dem Gestell (1) mit Hilfe des Arms (3, 10, 16) montiert ist.

## Claims

1. A pneumatic stripping system, in particular for stripping vine plants, intended to be mounted on an agricultural machine such as a tractor, and comprising:
- a casing (2) provided with an arm (3, 10, 16) intended to be mounted on the agricultural machine directly or via a frame (1), and provided with at least one opening (4 to 7),
- pneumatic stripping means (8, 9) mounted in the casing (2),
- a supply line (10) able to supply compressed air to the stripping means (8, 9), and thus to allow stripping by projecting compressed air by the stripping means (8, 9) through the opening (4 to 7) in the casing (2),
- at least two nozzles (12, 13) for projecting compressed air of different diameters, the system being **characterized by**:
- a selector (14) able to take a first and a second position in which it is capable of directing the flow of compressed air coming from the supply line (10) exclusively towards a first, respectively a second, of the two nozzles (12, 13), so that when the airflow is directed towards one of the two nozzles, the stripping is carried out according to one of the two stripping intensities, and when the airflow is directed towards the other of the two nozzles, stripping is carried out according to the other of the two stripping intensities,
- and in that this selector (14) comprises a valve having at least one outlet capable of communicating alternately, by rotation of the valve around a central axis, with one or the other of the two nozzles (12, 13) in the first, respectively the second position of the selector (14).

2. System according to claim 1, **characterized in that** the rotation of the valve (14) can be activated by means of activation means (20), manually and/or automatically by means of a command.

3. System according to claim 1 or 2, **characterized in that** the selector (14) comprises two separate outputs, each communicating with one of the two nozzles (12, 13), a valve being disposed between the selector and each of said nozzles and each of these valves being controlled manually and/or automatically, by means of control means, to block one or the other of the outlets, and thus render inactive one or the other of the two nozzles (12, 13).

4. Agricultural machine, such as a tractor, comprising a frame (1) for mounting ancillary equipment, **characterized in that** it comprises at least one stripping system according to any one of the preceding claims mounted on the frame (1) via the arm (3, 10, 16).
